# EUROPEAN PATENT APPLICATION

(11) **EP 2 741 244 A1**
(43) Date of publication of application: **11.06.2014**
(21) Application number: 13195710.2
(22) Date of filing: 04.12.2013
(51) Int. Cl.: G06Q 10/08

(54) **System and method for tracking and secure authentication of valuable assets, particularly works of art**

(30) Priority: 04.12.2012 EP 12195480
(71) Applicant: Swiss Stellage SA, 6913 Lugano - Carabbia (CH)
(72) Inventor: Denti, Rinaldo, 6913 Lugano - Carabbia (CH)
(74) Representative: Botti, Mario

(57) **Abstract**

The invention relates to a system (1) and an associated method for tracking and secure authentication of valuable assets (9), particularly works of art (7), in which it is provided assigning to each work of art (7) an authentication certificate and recording in a data base (4) sensitive data and information corresponding to each work of art (7). The method provides in particular for:
- preparing a document (8) provided with an identification code (11) to be assigned to the work of art to be tracked and a pair of labels (3', 3") having the same identification code (11) as said document (8);
- entering in said document (8) sensitive data and information relating to the work of art to be tracked;
- applying one (3') of the two labels onto the rear (16) of the work of art (7) and assigning the second label (3") to the document (8);
- copying and storing the unique identification code (11) in the data base (4) together with the sensitive data and information relating to that given work of art (7) to be tracked.

## Description

### Field of application

The present invention relates to a system and to an associated method for tracking and secure authentication of valuable assets, particularly works of art.

The invention concerns a system and a method of the aforementioned type in which it is provided assigning to each work of art an authentication certificate and recording in a data base sensitive data and information corresponding to each work of art.

More particularly, but not exclusively, the invention relates to a method for verifying a certification of authenticity of pictures, paintings, silkscreen prints, miniatures, sculptures and similar works of expressive art, and the description which follows is provided with reference to this specific field of application with the sole aim of simplifying illustration thereof.

### Prior Art

As is well known in this specific field, there exists a widespread need to be able to track and verify authentications and certifications which are assigned to valuable assets, in particular pictorial works of art.

It should be stated by way of premise that the field is partly regulated by legislation, but today there nevertheless prevails a certain degree of uncertainty due to the fact that further more stringent regulations are needed to protect more fully both copyrights and the right to certify works of art, with the aim of eliminating possible doubts or at least clearly resolving disputes over the origin or ownership of said works, if any.

For example, with regard to Italy, which is one of the countries most affected by these problems owing the notable historical and artistic heritage which it possesses, there exists law No. 1062 dated 25 January 1971 whereby all authentic works of art which are traded in the country must be provided with a photograph of the work of art itself, bearing on the rear a declaration of authenticity issued by the artist.

Basically each painting is provided with a Certificate of Authenticity which has, on the front, a photograph of the painting in question with the artist's stamp and signature, while on the rear the following information is shown: the title of the work of art, the used technique, the materials, the dimensions, the address of the artist, the date of execution. This data, which is filled in and signed by the artist, already constitutes a reliable guarantee as to the authenticity of the work of art.

Obviously, this Certificate of Authenticity may be prepared only by living artists, but it is obvious that serious problems may arise in the event of fraudulent imitation or falsification.

The current legislation (Art. 64 Common Text on Cultural Assets) stipulates that the vendor of the work of art or the art gallery owner must supply the Certificate of Authenticity or at least any documentation relating to the probable identity of the artist and origin of the work of art.

The question is more complex in the case of artists who have died before the date of enforcement of the aforementioned legislation.

For years it was considered that only the heirs of the deceased artist were authorized to issue the aforementioned Certificates of Authenticity, this resulting in the creation of a number of foundations named after famous deceased artists and authorized to issue posthumous certifications in connection with works of art of that artist. More recently there have been a number of legal rulings which have attributed also to certain recognized experts in the field the possibility of issuing certifications. At present, only the authentications agreed by certain experts or specialized art gallery owners recognized by the fine arts market are considered to be entirely reliable.

It is evident, however, that in this case also problems may arise in connection with fraudulent attempts to issue authentications for works of art which are of dubious origin or where it is difficult to determine the identity of the artist.

In the case of works of art which are unique, of major importance or form part of museum collections, data banks have even been created, accessible also by the Police authorities of various countries, where it is possible to record, also by way of a precautionary measure, the most important information relating to the nature of the works of art and their last location or proprietor. These solutions, however, have been devised in an attempt to combat major thefts and for insurance purposes, and not as practical methods for more common transactions and transfers of ownership which take place in the conventional fine arts market.

In order to overcome all these drawbacks specialized companies have been set up in order to carry out analysis of the documentation accompanying works of art and/or recovery of all the information necessary for verification of the authenticity, including selection of an expert or a reference organization (archive, foundation) and inclusion of the work in a catalogue of that given artist.

These companies make use also of the latest technology and developments which allow the works of art to be equipped with labels which help with tracking, such as QR (Quick Response) codes, namely two-dimensional bar codes which are able to be read by the latest smart phones.

The label with the bar code is affixed onto the rear of the work of art and has, associated with it, a corresponding technical record which is stored in a data base and which refers to the Certificate of Authenticity and the other information available for that work of art.

Although advantageous under various points of view and substantially satisfying the purpose, this solution nevertheless has a number or limitations and drawbacks which will be briefly summarised below. Firstly it consists of a service which envisages issuing of the label with the bar code only after acquisition of the data relating to works of art which already have a Certificate of Authenticity.

Therefore, since the labels are printed on each occasion, as required, and may be applied onto the rear of the works of art only once they have been printed following insertion of the relevant data in the data banks, this does not exclude the possibility of these labels being exchanged or replaced inadvertently or even deliberately with fraudulent intent, since the contents of the bar code label is not immediately intelligible.

It is envisaged in fact that the bar code label incorporates all the information relating to the corresponding work of art, but this fact is per se not an absolute guarantee as to the authenticity of the work of art.

Moreover, issue of a label should coincide with the availability of certifications and information about that given work of art, but it does not allow, however, all the parties concerned to be involved in the process for tracking and verifying the authentication, namely: the artist, the art gallery owner, the art expert and the private entity which manages issue of the labels.

The technical problem which forms the basis of the present invention is that of providing a system and an associated method for tracking and secure authentication of valuable assets, particularly works of art, which have respective structural and functional features such as to overcome all the drawbacks mentioned with reference to the prior art.

In particular, the system and the method according to the invention should allow tracking of the work of art to start as from the moment when initial verification of the authenticity is performed, involving in the tracking and authenticity verification process all the parties concerned, so that any counterfeiting attempt and/or any questioning as to the authenticity of the work of art is practically impossible.

Moreover, the system and the method according to the invention should possess the features of being extremely simple and easy to use so that they may be accepted and widely used by all the parties operating in the field.

### Summary of the invention

The proposed idea at the basis of the present invention is that of providing for the use of a document, incorporating a unique code and recording the sensitive data of the work of art to be tracked, as well as a pair of labels which are provided with the same unique code and at least one of which can be applied onto the rear of the work of art.

On the basis of this proposed idea the technical problem is solved by a system for tracking and secure authentication of valuable assets, particularly works of art, in which it is envisaged assigning to each work of art a certificate of authentication and recording in a data base sensitive data and information corresponding to each work of art, characterized in that it comprises:
- a document associated with the work of art to be tracked and provided with an identification code (11);
- at least one first label provided with the same identification code and applied onto the rear of the work of art to be tracked;
- said identification code being stored in said data base together with said sensitive data and information relating to that given work of art to be tracked.

Advantageously it is envisaged using a second label, in turn provided with the same identification code and associated with said document or said authentication certificate.

Moreover, the sensitive data and information stored in the data base includes at least one photographic image of the portion of the rear of the work of art onto which said first label is applied.

It is important to note that the document associated with the work of art is a paper document consisting of watermarked paper. Moreover, the aforementioned document includes anti-counterfeiting holograms, basically having a structure similar to that used for banknotes.

The second label is adhesive and is applied onto the rear of the document or onto said authentication certificate.

Advantageously, the first and second labels are identical and have an anti-removal or anti-tamper structure.

Moreover, the first and second labels are produced together with the document associated with the work of art, said identification code being incorporated in them. In practice, the aforementioned document and the corresponding labels are printed by a single authorized entity able to satisfy the quality standards as regards watermarked printing and inclusion of anti-counterfeiting holograms.

The invention also relates to a method for tracking and secure authentication of valuable assets, particularly works of art, in which it is provided assigning to each work of art a certificate of authentication and recording in a data base sensitive data and information corresponding to each work of art, characterized by:
- preparing a document provided with an identification code to be associated with the work of art to be tracked and at least one label having the same identification code as said document;
- recording in said document sensitive data and information relating to said work of art to be tracked;
- applying one of said labels onto the rear of the work of art;
- entering and storing in said data base said identification code together with said sensitive data and information relating to that given work of art to be tracked.

Advantageously it is provided using a second label applied onto the rear of said document or onto said authentication certificate.

The characteristic features and advantages of the system and the method according to the present invention will become clear from the detailed description of a non-limiting example of embodiment thereof made with reference to the figures in the accompanying drawings.

### Brief description of the drawings

- Figure 1 shows a schematic view of a system for tracking and secure authentication of valuable assets in general, and works of art in particular, realised in accordance with the present invention;
- Figure 2 shows a particular detail of a component of the system of Figure 1;
- Figure 3 shows a schematic view of the rear of the detail of Figure 2;
- Figure 4 shows the rear of a work of art with which a component of the system of Figure 1 has been associated;
- Figure 5 shows a schematic view of a record in a data base incorporating, according to the invention, sensitive data and information relating to a work of art.

### Detailed description

With reference to these figures, a system realised in accordance with the present invention for tracking and secure authentication of valuable assets 9 in general, particularly works of art, is generally and schematically indicated with 1.

For the purposes of the present description, "valuable asset" is understood as meaning any article or object to which an intrinsic value may be assigned and which may have a market in connection with private and/or public collections or free sales.

In the case of valuable assets of this kind normally there exists a twofold need:
- that of being able to authenticate the assets, i.e. to be able to attribute with certainty an author/artist or an origin to them; and
- that of being able to track the assets, i.e. to be able to reconstruct over time the transfers or changes in ownership which have taken place.

More particularly, in the embodiment described here by way of a non-limiting example, we shall refer to a valuable asset 9 represented by a visual or pictorial work of art 7 such as a picture, a painting, a silkscreen print, a miniature, a print, a sculpture or any other expressive art form, independently of the technique used to produce it, its geometrical dimensions and the used materials.

For the purposes of the present invention the only necessary condition is that this valuable asset 9, and in particular the work of art 7, should be suitable for authentication and tracking in accordance with the needs described above.

The system 1 according to the present invention comprises computerized means, and in particular at least one remote electronic processor 2 which has the task of managing a data base 4 by means of a suitable application program which can be accessed by means of a conventional connection 6 to which at least one user terminal 5 situated remotely has access.

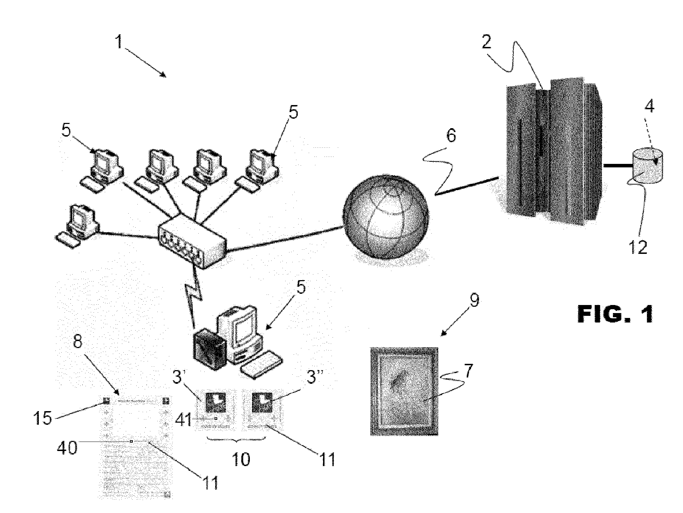

Figure 1 shows purely by way of example a network of terminals 5 each connected to the aforementioned remote processor 2. Obviously, each of the terminals 5 may be situated in a location which is geographically remote from the electronic processor 2. The methods for connection to the remote processor 2 may vary greatly but do not constitute any limitation of the rights of the Applicant; for example, the connection may be performed via the Internet, a cable network, wirelessly, via satellite or by means of radiofrequency.

The database 4 is structured as a relational database and the associated physical medium is shown schematically as being a mass memory 12 having a two-way connection with the electronic processor 2. Obviously it is also possible for the database to be located remotely from the processor 2 or for it to be incorporated therein, without this representing any limitation of the Applicant's rights.

The system 1 also comprises a document 8 which is structured in accordance with the present invention for recording in written form sensitive data and information relating to a work of art 7. The document 8 is comparable to a Certificate of Authenticity 35 described with reference to the prior art, but is intended to supplement rather than replace it, as will become clear from the continuation of the description below.

In other words, if the work of art 7 already has its own Certificate of Authenticity 35 prepared by the author/artist of the work of art, the document 8 is associated with this Certificate of Authenticity 35; if, instead, the work of art 7 is yet to be certified, as in the case of a first original work of art, then the document 8 may be used as Certificate of Authenticity.

The association between a document 8 and a corresponding work of art 7 is "bi-unique" in the sense that one and only one work of art 7 corresponds to a document 8.

The document 8 is preferably a paper document consisting of watermarked paper and optionally incorporating anti-counterfeiting holograms 13, basically with a structure similar to that used for banknotes. In one alternative embodiment the document 8 is obtained through a material similar to a paper material but having a synthetic plastic structure, for example with at least one base sheet and at least one covering sheet, in case transparent, forming a multilayer or sandwich structure. The document 8 has the appearance of a certificate, namely a form on A4 vellum paper.

Other measures are used to render the document 8 "counterfeit-proof', in particular a silkscreen printing method may be used.

Moreover, the document 8 has a distinctive symbol 15 being reproduced on at least one peripheral portion of the document itself.

All of this helps ensure that the document 8 cannot be easily copied or falsified and also provides a kind of guarantee as to the quality of the document issued. Moreover, it should also be noted that the document 8 is printed by a single authorized entity able to meet the quality requirements for watermarked printing and inclusion of the anti-counterfeiting holograms as described above.

Advantageously, according to the present invention, an identification code which is distinct and unique is associated with each document 8, in the sense that two documents with the same code are not issued.

The code 11 is incorporated in the document 8 itself, in the sense that it is printed with the document 8 and is not added subsequently. It is important to note that the document 8 leaves the printing presses with the associated unique reference code which has been assigned to it already imprinted.

Advantageously, in a preferred embodiment, the code 11 is stored on a data storage device 40 strictly associated to the document 8 or, better, incorporated in it. More particularly, the data storage device may be a strip of magnetic material, a one-dimensional or bi-dimensional element with barcode, or a miniaturized memory integrated circuit, for example a tag of an RFID system.

Preferably, a so-called passive tag is used, incorporating an antenna, that doesn't need the maintenance of an electric supply source on board of the document 8, but that can be detected through a corresponding proximity-RFID reader that interacts with the data storage device 40 when positioned near it.

The data storage device has very reduced dimensions, for instance of the order of few square millimeters, and it's nested in the multilayer structure of the document 8, for instance in a recess obtained in such multilayer structure.

In an alternative embodiment, the data storage device is nested in an adhesive strip bound associated to the document 8.

In the data storage device 40 are stored at least the same data reported on the document 8 and an additional data that points out or locates that the association of the data storage device to the document 8 and not to another type of element, fact that provides a further advantage as we will see below. Advantageously, however, all these data and the identification code 11 are stored in ciphered form to further increase the resistance to the counterfeit or to the violation of the data associated to the document 8.

As we shall see below, an electronic record 20 in the data base 4 of the electronic processor 2 is associated with each given code 11.

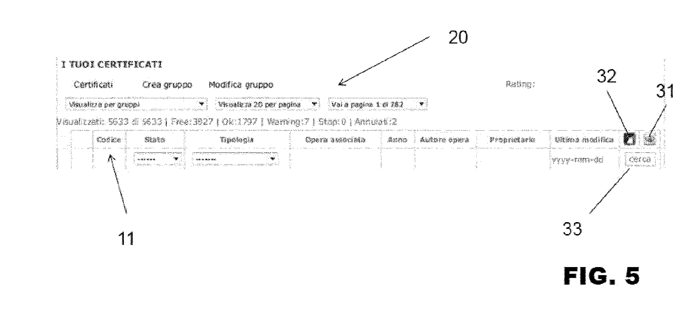

This electronic record 20 is used to enter and store all the relevant sensitive information relating to a corresponding work of art 7 with which a document 8 and the corresponding identification code 11 have been associated, as we shall see in greater detail below with specific reference to the example shown in Figure 5.

In addition to the document 8, the system 1 according to the present invention also comprises the use of a pair 10 of special labels 3', 3". It should be immediately said that, for the purposes of the invention, it would be sufficient to use a single label 3', but the example of embodiment described here by way of a non-limiting example is based on the use of a pair 10 of labels 3', 3" which allow further advantages of the invention to be achieved.

Each label 3', 3" of a given pair 10 of labels shows the same unique code printed on the corresponding document 8. In this case also the code 11 is incorporated in the labels 3', 3" when they are produced and is not applied afterwards.

Essentially, a document 8 with a given code, for example B12345, has, associated with it, the two labels 3', 3" each provided with the same code B 12345. It is also understood that, should only one 3' of the two labels be used, this single label would have the same identification code as the document 8.

The labels 3', 3" are self-adhesive and have an anti-removal or anti-tamper structure, for example have a series of incisions on the printed medium, whether it be paper or synthetic material, which facilitate breakage thereof in the event of an unauthorized attempt at removal. However, the glue used for adhesive effect is chosen from among those which do not contain solvents and which do not damage the work of art.

The labels 3', 3" are printed by the same entity which is responsible for issuing the document 8 and using measures and methods which are similar from the point of the view of the resultant structure. This means that each label 3', 3" has a paper-like structure on watermarked paper incorporating anti-counterfeiting holograms 13 similar to those already present on the corresponding document 8.

Advantageously, also the labels 3', 3 " are obtained through a material similar to a paper material but with a synthetic plastic structure, for example with at least one base sheet and at least one covering sheet, in case transparent, forming a multilayer or sandwich structure.

Moreover, in a preferred embodiment, also for the label (if only one is used) or for the labels 3', 3" the code 11 is stored on a data storage device 41 strictly associated to the label or, better, incorporated in it. In case the couple of labels are both used, it is also possible to adopt an alternative solution in which the identification code is stored on board of only one of those labels.

As already said for the document 8, the data storage device 41 may be a strip of magnetic material, a one-dimensional or bi-dimensional element with barcode, or a miniaturized memory integrated circuit, that is a so-called tag of the RFID system.

In both cases, with one or two labels 3' and 3", is preferably used a tag equipped with an antenna that doesn't need the maintenance of a source of electric supply on board of the labels 3', 3", but that allow to read the stored data through a corresponding proximity-RFID reader that detects the data stored in the device 41 when positioned near it.

The data storage device 41 has very reduced dimensions, for instance of the order of few square millimeters, and it's nested in the multilayer structure of the labels 3' or 3", for instance in a recess obtained in such multilayer structure.

In an alternative embodiment, the data storage device is nested in an adhesive strip bound to one or both the labels 3' or 3".

In the data storage device 41 are stored at least the same data on the document 8.

However, it is important to note that there is a different data compared to those stored on the document 8; this data is indicative of the fact that, in this case, the association of the data storage device 41 has been made with a label 3' or 3" and not with the document 8. In this way, with the reading of data through the RFID system, it is possible to confirm the fact that the data storage device 41 is accurately associated to the label and not to another type of document, such as the document 8.

Advantageously, however, all these data and the identification code 11 are memorized in ciphered form to further increase the resistance to the counterfeit or to the violation of the data associated to the labels 3' or 3".

The labels 3', 3" also bear a distinctive symbol 15 identical to that present on the document 8.

The first and second labels 3', 3" of the pair 10 are substantially identical and duplicates, but able to be handled separately. One label 3' is intended to be associated with the work of art 7, while the duplicate label 3" is intended to be associated with the document 8 or a Certificate of Authenticity already available for that given work of art 7.

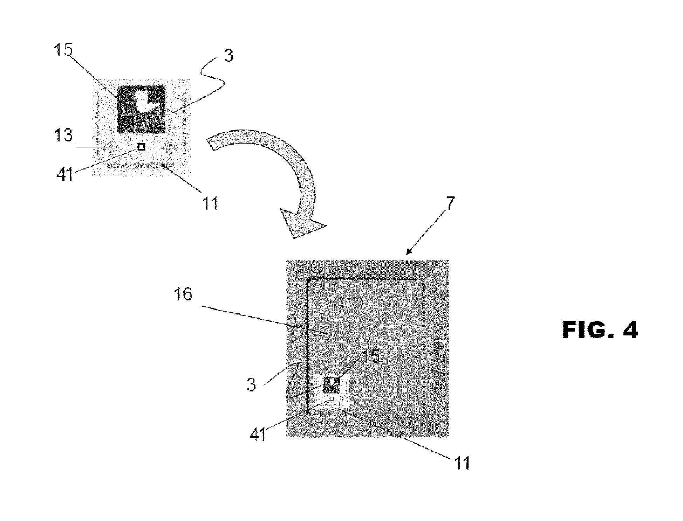

The example of Figure 4 shows one of the two labels 3' applied onto a back or rear-lying portion 16 of the work of art 7.

Preferably, this portion 16 is the rear of the work of art 7, i.e. is a part of the canvas situated at the back of the painting.

For the purposes of the present invention, it should be pointed out that the term "rear" or "rear-lying part" is understood as meaning a non-visible portion of the work of art. As a result, in the case of an expressive pictorial work of art, it is preferable that the label should be applied onto the rear of the work and not onto any frame being present since the latter would be potentially removable. In the case, instead, where the work of art is a sculpture, the zone on which the label is to be applied could be the part situated underneath the base of the sculpture.

The two labels are obviously interchangeable; however, for the purposes of the present description we shall say that the first label 3' is intended to be applied to the work of art 7, while the second label 3" is intended to be applied to the document 8 or, alternatively, to said Authenticity Certificate 35 when already available.

From the above description it emerges in a substantially clear manner that the document 8 and the associated labels 3', 3" of the pair 10 cooperate in order to implement the method according to the invention and achieve its advantages which shall be listed below.

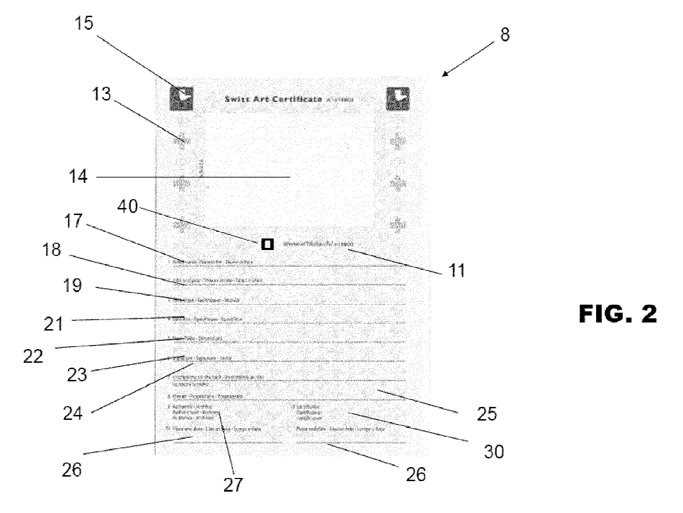

Firstly, however, in order to better understand all the aspects of the invention, it is useful to illustrate in full the information which may be recorded by careful completion of the fields of the document 8, as can be seen in Figure 2.

A space 14 is provided in a top central position for applying a photo of the work of art 7 to which the document 8 relates.

A first field 17 is intended for written entry of the author's or artist's name.

A second field 18 is provided for indicating the title of the work of art.

A third field 19 is provided for indicating the technique used to produce the work of art 7.

A fourth field 21 is provided for including any notes and specific comments regarding the work of art 7.

A fifth field 22 is provided for indicating the geometrical dimensions of the work of art.

A sixth field 23 is intended for the author's signature.

A seventh field 24 is used to indicate any inscriptions on the rear 16 of the work of art and in any case the actual presence of the first label 3' applied onto the rear 16 of the work of art.

An eighth field 25 shows the data of the proprietor who owns the work of art 7.

Also provided are two fields or spaces 27 and 30 for the signatures of the art gallery owner or of a certifying entity and a third authentication signature for archiving purposes.

The document 8 is then dated with an indication of the location where compilation of the data was performed. Spaces 26 are provided for the location and the date underneath each of the fields 27 and 30.

The back of the document 8 is provided with a further field 28 containing a number of lines for the entry of any information relating to transfers or changes in ownership of the work of art.

It is important to note that all information entered by means of the document 8 is recorded in an orderly manner in the data base 4 in corresponding fields of the record 20.

Moreover, in the record 20 there are assigned at least three image fields for inserting a frontal image of the work of art, the image of a detail and the image of the rear of the work where the first label 3' is applied.

A schematic view of the fields available in the record 20 is shown in

Figure 5. As can be seen, the record expressly provides that there is a code field for storing the unique identification code present on each document 8 and on the corresponding labels 3', 3".

The other fields can be used to record information about the state of the work of art, the type of authenticity certificate available, the title of the work, the year of execution, the artist or author, the proprietor and date of the last change.

The command 31 allows access to a following part of the record in which it is possible to store further information such as the three images of the front, rear and detail of the work of art; information about any exhibitions in which the work of art has been included or press articles about the diffusion of other works by the same author/artist or any other type of information useful for the purposes of tracking the work.

Advantageously, the record 20 also contains fields for storing information and links to video images about events in which that work of art 7 has been exhibited.

The command 32 is particularly important because it allows one to confirm to the application program of the system for management of the data base 4 that all the information recorded is correct and complete.

Selection of this command allows the information in the record 20 to be fixed, frozen or in any case definitively associated with the unique identification code 11 of the document 8 and the associated labels 3' and 3".

This means that it is no longer possible to modify any basic fields of the record 20 and, in particular, the images of the front and rear of the work of art, which will remain indelibly associated with the aforementioned identification code 11.

Implementation of the method according to the present invention is particularly simple and effective.

In accordance with that described above it is obviously required to have a document 8 and a pair of corresponding labels 3' and 3" for each work of art 7, which is to be verified for its authenticity and for which a record tracking and storing data and information relating to all the possible changes in ownership is to be started

As mentioned, the document 8 and the labels 3', 3" are issued by a single authorized entity able satisfy the quality standards as regards watermarked printing and inclusion of the anti-counterfeiting holograms 13. For this reason, the source for production of the various documents 8 and the corresponding labels 3', 3" provided with identification codes is unique.

This original material is released by the Applicant under licence to art gallery owners and vendors and/or certifying entities of proven experience, capacity and reputation, whose details are in any case recorded in the aforementioned database 4.

Obviously, the Applicant may grant a special licence also to authors/artists who wish to use the system and the method of the present invention in order to certify their own works.

The entity managing the licences is therefore able to identify and store in a data base both the number of documents 8 and associated labels 3', 3" granted under licence and available for a given art gallery owner or author/artist and the type of code shown on said documents 8. This is a further guarantee of the controlled distribution of these documents 8 and the associated labels 3', 3".

If the work of art already has its own Certificate of Authenticity 35, the document 8 will be used to collect in any case all the information and the sensitive data relating to that given work of art 7. The document 8 normally contains more information than a normal Certificate of Authenticity 35 which by law requires essentially a photo of the work, the title, the name of the author/artist, his/her signature and a date.

In this specific case the document 8 accompanies and supplements the already existing Certificate of Authenticity 35 which is handed over by the art gallery owner/vendor to the purchaser of the work.

If, on the other hand, the work of art 7 must be certified for the first time as authentic, then the same document 8 may be used as a certificate attesting the authenticity of the work of art.

In fact the document 8 possesses all the characteristics for use as a certificate of authenticity, having a special space 14 for showing the photo of the work of art and sufficient fields 17 to 23 for recording in written form all the data and information of that given work of art.

It should be noted that, in the fields 23 to 30, it is possible include the signature of the author/artist, which is required by law for the certificate of authenticity, but also the signature of the art gallery owner, or also the additional signature 27 of a certifying entity vouching for both the above.

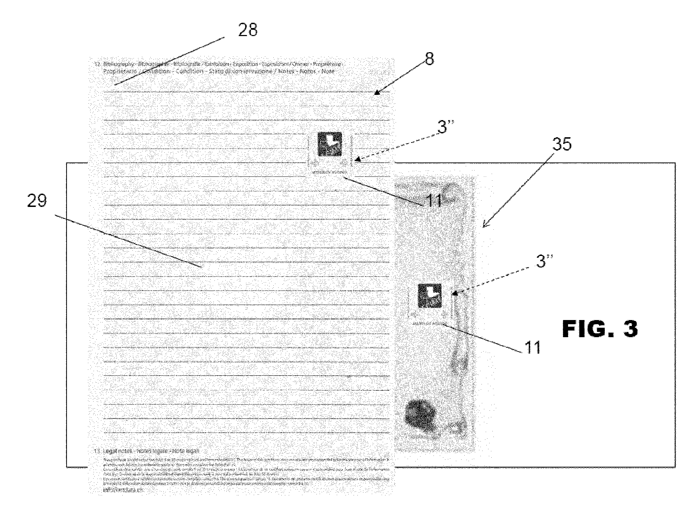

In accordance with the method of the present invention, when the work of art 7 already has its own Certificate of Authenticity 35, the first label 3' is applied onto the rear 16 of the work, while the second label 3" is applied onto the aforementioned Certificate of Authenticity 35, as shown in Figure 3.

When instead the work of art 7 undergoes initial certification of authenticity, the first label 3' is always applied onto the rear 16 of the work of art, while the second label 3" is applied onto the document 8.

More particularly, the second label 3" is applied onto the rear 29 of the document 8, after compilation of the field 28 relating to any changes in ownership of the work of art, as clearly shown in Figure 4.

However, this procedure is optional since the first label 3' on its own, together with the associated unique code corresponding to that of the document 8, is already sufficient for correctly recording the data in the data base 4. The second label represents an additional safety measure and is particularly useful when an original Certificate of Authenticity 35 is available so that it may be also advantageously used for the purposes of tracking and authentication by the system and the method of the present invention.

At this point, the art gallery owner/vendor, who has personal reserved access to the database 4, has the possibility of entering into the data base, in a corresponding record 20, all the sensitive information and data relating to that particular work of art.

It is the responsibility of the art gallery owner to enter accurately and faithfully all the information relating to that specific work of art, failure to do so resulting in risk of his/her credibility and reputation being undermined.

It is very important to note that the data entered in the records 20 of the data base 4 provide not only the possibility of inserting a front-on image of the work of art, but also an image of the rear-lying portion onto which the first label 3' is applied.

In this way it is possible to keep also a very visually clear record of the label 3', of the surrounding area, with all the details and any irregularities of the medium onto which it is applied, and of the code indicated thereon.

Also this image of the rear of the work of the art and the portion 16 onto which the first label 3' is applied forms part, according to the present invention, of the essential and obligatory data stored in the database 4.

Moreover, as already mentioned with reference to the embodiment of the system of the present invention, the application program of the data base 4 which contains the records 20 provides a special command 32 for saving the data which allows the important information relating to a work of art to be fixed and frozen once their completeness is sure. Once this command has been used, it is no longer possible for the user to modify this information and in particular it is no longer possible to dissociate the photos of the front and rear of the work of art from the unique identification code of the associated document 8 assigned to it.

The invention therefore solves the technical problem and achieves numerous advantages, the primary one of which is undoubtedly the fact that a work of art 7 which has been processed using the method of the present invention and included in the database of the system according to the invention can be easily recognized as an authentic work of art and that the entire history of said work of art, relating to transfers or changes in ownership, may be easily reconstructed.

Moreover, the documents 8 and the associated labels 3', 3" allow the method according to the present invention to be implemented in a particularly simple manner from an operative point of view, without unduly complicating the operations which are normally performed during a sales transaction between an art gallery owner and a purchaser and providing an absolute guarantee as regard to future tracking of the work.

## Claims

1. System (1) for tracking and secure authentication of valuable assets (9), particularly works of art (7), in which it is provided assigning to each work of art (7) an authentication certificate and recording in a data base (4) sensitive data and information corresponding to said each work of art (7), **characterized in that** it comprises:
- a document (8) associated with the work of art to be tracked and including a data storage device (40) wherein it is stored a unique identification code (11) in a ciphered form;
- at least one first label (3'), including a data storage device (41) wherein it is stored the same identification code (11) in a ciphered form, applied onto the rear of the work of art (7) to be tracked;
- said identification code (11) being also stored in said data base (4) together with said sensitive data and information relating to that work of art (7) to be tracked.

2. System according to Claim 1, **characterized in that** it comprises a second label (3'), in turn provided with the same identification code (11) and associated with said document (8) or said authentication certificate (35).

3. System according to Claim 1, wherein said sensitive information stored in said data storage devices (40, 41) and in the data base (4) includes at least one photographic image of the portion of the rear (16) of the work of art (7) onto which said first label (3') is applied.

4. System according to Claim 1, wherein said document (8) is a paper document consisting of watermarked paper or of synthetic plastic material or with the inclusion of anti-counterfeiting inserts (13) similar to those used for banknotes.

5. System according to Claim 1, wherein said second label (3") is adhesive and is applied onto the rear of said document (8) or onto said authentication certificate.

6. System according to Claim 1, wherein said first label (3') and said second label (3") are identical and have an anti-removal or anti-tamper structure with said data storage device (40, 41) nested in the structure.

7. System according to Claim 1, wherein said first label (3') and said second label (3") are produced together with said document (8), incorporating in them said unique identification code (11).

8. System according to Claim 1, wherein said data base (4) contains a record (20) for storing all the sensitive data and information entered in said document (8) for each corresponding work of art (7) and said record can be retrieved and accessed by means of said unique identification code (11).

9. System according to Claim 8, **characterized in that** the application program for management of the data base includes a command (32) for saving the data which definitively fixes the important information relating to a given work of art (7), preventing the images of the front and rear of the work of art from being dissociated from the unique identification code (11) of the associated document (8) assigned thereto.

10. System according to Claim 1, wherein a portion of said record (20) includes fields for storing information and links to video images about events in which the work of art (7) has been exhibited.

11. Method for tracking and secure authentication of valuable assets (9), particularly works of art (7), in which it is envisaged assigning to each work of art (7) a certificate of authentication and recording in a data base (4) sensitive data and information corresponding to each work of art (7), **characterized in that** it comprises:
- preparing a document (8) including a first data storage device (40) wherein it is stored a unique identification code (11) in a ciphered form to be assigned to the work of art to be tracked and at least one label (3') including a second data storage device (41) wherein it is stored the same identification code (11) in a ciphered form;
- entering in said document (8) and in said data storage device (40) sensitive data and information relating to said work of art to be tracked;
- applying said at least one label (3') onto the rear (16) of the work of art (7);
- copying and storing said identification code (11) in said data base (4) together with said sensitive data and information relating to that work of art (7) to be tracked.

12. Method according to Claim 11, **characterized in that** it provides for using a second label (3") applied onto the rear (29) of said document (8) or onto said authentication certificate (35).

13. Method according to Claim 11, wherein the sensitive data and information stored in the data base (4) includes at least one photographic image of the portion of the rear of the work of art (7) onto which said first label (3') is applied.

14. Method according to Claim 11, **characterized in that** said data base (4) contains a record (20) for storing all the sensitive data and information entered in said document (8) for each corresponding work of art (7) and that said record can be retrieved and accessed by means of said unique identification code (11).

15. Method according to Claim 11, **characterized in that** the application program for management of the data base (4) includes a command (32) for saving the data which allows the important information relating to a given work of art (7) to be definitively fixed, preventing the images of the front and rear of the work of art from being dissociated from the unique identification code (11) of the associated document (8) assigned thereto.
